# EUROPÄISCHE PATENTSCHRIFT

(11) **EP 0 619 214 B1**
(45) Veröffentlichungstag und Bekanntmachung des Hinweises auf die Patenterteilung: **19.06.1996**
(21) Anmeldenummer: 93112749.2
(22) Anmeldetag: 09.08.1993
(51) Int. Cl.: B62B 3/00

(54) **Transportwagen**
Transport carriage
Chariot de transport

(30) Priorität: 08.04.1993 DE 9305374 U
(43) Veröffentlichungstag der Anmeldung: 12.10.1994
(73) Patentinhaber: Zuiderduin, Albert, D-47877 Willich (DE); Dick, Toni, D-52372 Kreuzau (DE)
(72) Erfinder: Zuiderduin, Albert, D-47877 Willich (DE); Dick, Toni, D-52372 Kreuzau (DE)
(74) Vertreter: Mayer-Pohske, Joachim-Wolfgang

(56) Entgegenhaltungen:
- DE-A- 2 924 261
- DE-A- 3 500 700

## Beschreibung

Die Erfindung betrifft einen auf einer Fahrbahn verfahrbaren Transportwagen mit einem rechtwinkligen Grundrahmen, aus langgestreckten Rahmenelementen bestehend.
Transportwagen dieser Art sind ganz allgemein bekannt und werden benutzt beispielsweise auf Gemüsemärkten oder Blumenmärkten. Sie weisen einen Grundrahmen mit einem Einlegeboden auf, wobei der Grundrahmen auf vier z. B. um eine vertikale Achse schwenkbaren Rädern steht. Der Grundrahmen weist in der Regel an seinen vier Ecken vier vertikal gerichtete Säulen auf, zwischen denen weitere Einlegeböden eingesetzt werden können, auf die dann irgendwelche zu transportierende Behälter mit Inhalt abgestellt werden können. Es ist vielfach nötig oder wünschenswert, mehrere solcher Wagen zusammenzukoppeln, die dann gleichzeitig transportiert werden können. Hierfür existiert jedoch keine praktikable und einfache Lösung.

Der Erfindung liegt somit die Aufgabe zugrunde, einen Transportwagen der eingangs beschriebenen Art so weiterzuentwickeln, daß er sehr einfach und mit einfachen Mitteln mit anderen Transportwagen gleicher Art zusammenzukoppeln ist.

Diese Aufgabe ist erfindungsgemäß dadurch gelöst, daß in mindestens einem ersten Rahmenelement zwei vertikal zur Fahrebene verlaufende Bohrungen, von denen mindestens eine durchgehend ist, und in jedem, dem ersten Rahmenelement gegenüberliegenden weiteren Rahmenelement mindestens eine einzelne Bohrung vorgesehen ist, wobei in einer durchgehenden Bohrung des ersten Rahmenelementes ein Rundbolzen in seiner Längsrichtung verschiebbar und um seine Längsrichtung schwenkbar angeordnet ist, der an seinem oberen Ende über ein Verbindungsstück mit einem kürzeren, nach unten überstehenden Rundbolzen verbunden ist und so eine Kupplung bildet, wobei die einzelne Bohrung so angeordnet ist, daß dann, wenn ein erstes Rahmenelement eines Transportwagens benachbart zu dem weiteren Rahmenelement eines weiteren Transportwagens liegt, der kürzere Rundbolzen in die Bohrung dieses weiteren Rahmenelementes einsteckbar ist und wobei die zweite Bohrung des ersten Rahmenelementes zu dessen anderer Bohrung so beabstandet ist, daß in Ruhestellung der kürzere Rundbolzen nach einer Schwenkung um die Längsrichtung des Rundbolzens dort einsteckbar ist. Die Kupplung kann somit über die beiden Rundbolzen und dem diese beiden Rundbolzen miteinander verbindenden Verbindungsstück in die entsprechenden Bohrungen der Rahmenelemente vertikal z. B. von oben nach unten, eingesetzt werden, so daß diese Rahmenelemente und damit die zugeordneten Transportwagen miteinander verkuppelt sind. In dieser Anordnung liegen die Transportwagen fest aneinander an, so daß sie einen starren Verbund bilden. Die Kupplung ist also sehr einfach ausgebildet und sehr einfach handhabbar.

Nach einer Ausgestaltung der Erfindung ist vorgeschlagen, daß die langgestreckten Rahmenelemente aus Vierkantrohr gebildet sind, in deren parallel zur Fahrebene liegendende Wände die Bohrungen eingebracht sind. Aus solchen Vierkantrohren sind die Rahmenelemente sehr einfach herzustellen und es sind sehr einfach die entsprechenden Bohrungen einzubringen.

Eine ergänzende Ausgestaltung der Erfindung sieht vor, daß mindestens die zur Herstellung der Verbindung mittels der Kupplung dienenden Bohrungen von in entsprechende Öffnungen der Rahmenelemente eingesetzten Rohrstücken gebildet werden. Hierdurch wird verhindert, daß in den Bohrungen des jeweiligen Vierkantrohres durch die Bolzen der Kupplung und die Transportkräfte eine zu große Lochlaibung entsteht, die diese Bohrungen in den Vierkantrohren unerwünscht verformen würde. Ergänzend ist dann weiter vorgeschlagen, daß die Rohrstücke eingeschweißt sind. Auf diese Art und Weise lassen sich die Rohrstücke sehr einfach und dauerhaft befestigen und die entsprechenden Kräfte über die Schweißnaht gut auf den Rahmen und den Wagen übertragen.

Eine andere Ausgestaltung der Erfindung sieht vor, daß die Kupplung U-förmig aus Rundmaterial gebogen ist mit zur Bildung des Rundbolzens und des kürzeren Rundbolzens entsprechend unterschiedlich langen Schenkeln, die über das Verbindungsstück miteinander verbunden sind. Die Kupplung ist damit durch einen einfachen Biegevorgang auf einer entsprechenden Biegevorrichtung herstellbar, wenn der Durchmesser des Rundmaterials eine für das Einsetzen in die Bohrungen des Rahmens geeignete Größe hat.

Eine ergänzende Ausgestaltung der Erfindung sieht noch vor, daß der Rundbolzen auf der Unterseite der zugeordneten Bohrung übersteht und am überstehenden Ende ein Sicherungselement gegen Herausziehen aufweist. Auf diese Art und Weise bleibt die Kupplung selbst immer an einen Wagen, so daß sie nicht als Einzelelement verloren gehen kann. Sie steht dann, wenn mehrere solcher Transportwagen miteinander verbunden werden sollen, immer griffbereit zur Verfügung.

Eine weitere Ergänzung der Erfindung sieht noch vor, daß zwischen Sicherungselement und Rohrende ein elatisches Element angeordnet ist. Hierdurch wird in gekuppelter Stellung die Kupplung immer in Kuppelstellung gehalten und kann nicht z. B. durch Schütteln sich ungewollt lösen. Gleiches gilt für die Ruhestellung, wodurch gleichzeitig eine unerwünschte Lärmentwicklung durch Klappern des Kupplungsstückes in den zugeordneten

Bohrungen verhindert wird.

Ergänzend ist dann noch vorgeschlagen, daß das elastische Element als koaxial zum Rundbolzen angeordnete Schraubendruckfeder ausgebildet ist. Solche Schraubendruckfedern stehen in genormten Abmessungen und Federkennlinien zur Verfügung und sind einfach montierbar.

Eine weitere Ausgestaltung der Erfindung sieht vor, daß das Sicherungselement als quer durch eine entsprechende Bohrung betriebene Spannhülse ausgebildet ist. Diese Spannhülse kann zum einen eine unbeabsichtigte Entnahme des Kupplungsstücks oder ein einfaches Herausfallen verhindern und kann andererseits das erwähnte elastische Element oder die erwähnte Schraubendruckfeder abstützen. Hierbei ist eine Spannhülse einem Paßstift oder einem Kerbstift vorzuziehen, weil sie in eine ungenaue Bohrung, die damit einfach herstellbar ist, eingesetzt werden kann und die elastische Spannkraft für einen dauerhaft festen Sitz der Spannhülse sorgt.

Weiter ist nach einer Ausgestaltung der Erfindung noch vorgeschlagen, daß das Verbindungsstück bogenförmig zur Bildung eines Handgriffs ausgebildet ist. Hierdurch ist die Kupplung von Hand leicht greifbar und kann leicht in Kupplungsstellung oder in Ruhestellung gebracht werden.

Schließlich ist nach der Erfindung noch vorgesehen, daß zwischen Rundbolzen und dem Anfang des bogenförmigen Verbindungsstückes koaxial zum Rundbolzen eine Auflagescheibe vorgesehen ist. Hierdurch wird die Kupplung nur bis in eine definierte Lage abgesenkt und kann sich nicht verklemmen.

Die Erfindung soll nun anhand der beigefügten Zeichnungen näher erläutert werden.

Es zeigen:
- Figur 1: Transportwagen in Perspektive, stehend auf einer nicht näher dargestellten Fahrebene
- Figur 2: aneinander anliegende und über eine Kupplung miteinander verkuppelte Rahmenelemente von zwei nebeneinander angeordneten Transportwagen
- Figur 3: Schnitt entlang der Linie A - A nach Fig. 2
- Figur 4: Schematische Darstellung von zwei an ihren Breitseiten miteinander gekuppelten Transportwagen
- Figur 5: Schematische Darstellung von zwei an ihren Schmalseiten miteinander gekuppelten Transportwagen

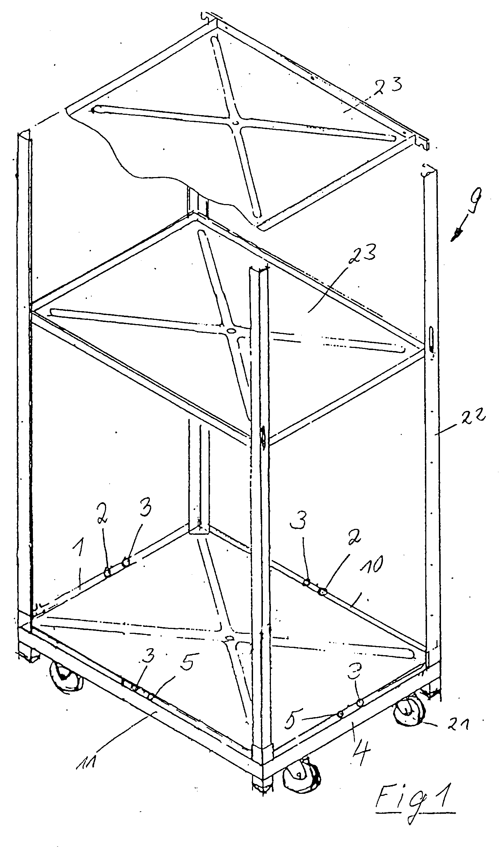

Fig. 1 zeigt einen Transportwagen 9, der mit schwenkbaren Rändern 21 auf einer nicht näher dargestellten Fahrebene, z. B. einem Hallenboden, abrollen kann. Der Transportwagen 9 besteht im wesentlichen aus einem rechtwinkligen und im Ausführungsbeispiel rechteckigen Grundrahmen, der aus vier Rahmenelementen zusammengesetzt ist, von denen sich die Rahmenelemente 1 und 4 einerseits zur Bildung der Schmalseite und die Rahmenelemente 10 und 11 andererseits zur Bildung der Breitseite jeweils gegenüberliegend angeordnet zusammensetzen zu diesem Grundrahmen. Die genannten Rahmenelemente sind vorzugsweise aus Vierkantrohr oder Winkelprofil gefertigt. Der so gebildete Grundrahmen trägt an seinen vier Ecken jeweils eine Säule 22 zwischen denen Einlegeböden 23 eingehängt werden können. Diese Anordnung ist ansich bekannt und muß daher hier nicht näher beschrieben werden.

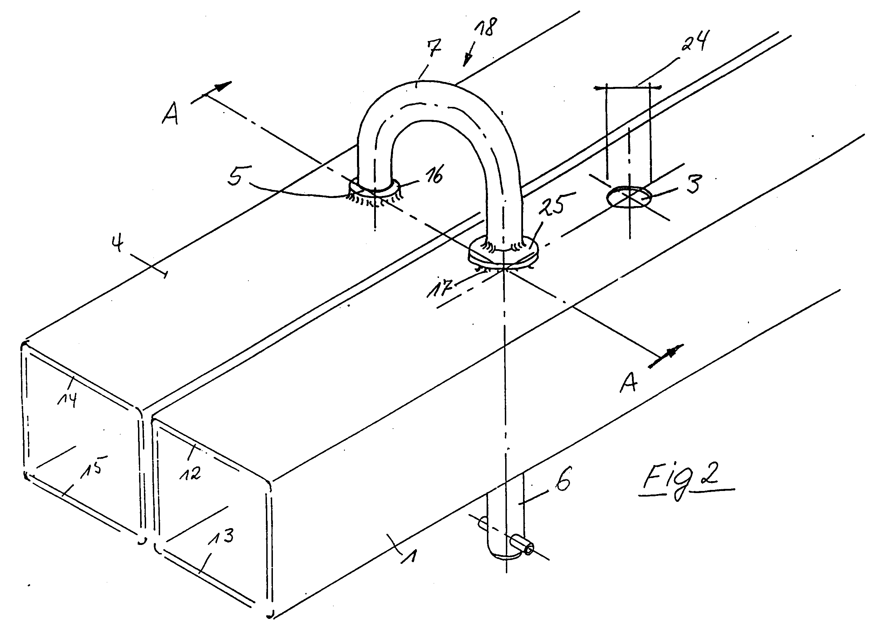

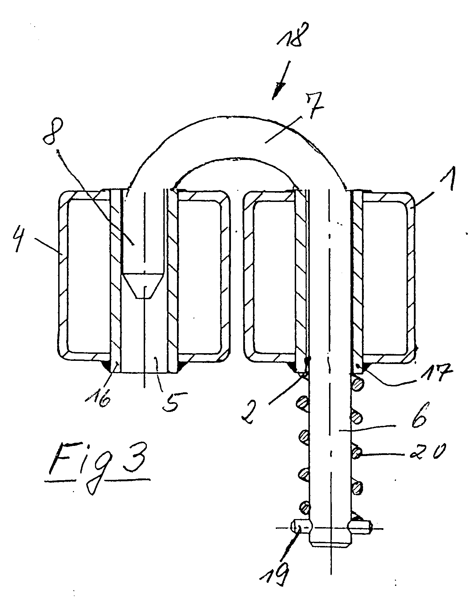

In Fig. 2 sind die Rahmenelemente 1 und 4 von benachbart angeordneten Transportwagen perspektivisch und in Fig. 3 im Schnitt A - A nach Fig. 2 dargestellt und mit Hilfe der Kupplung 18 miteinander gekuppelt. Wird z. B. zum Transportwagen 9 der Fig. 1 stirnseitig ein weiterer Transportwagen 9 angeschoben, so daß das weitere Rahmenelement 4 benachbart zum ersten Rahmenelement 1 des Transportwagen 9 nach Fig. 1 angeordnet ist, so können die Transportwagen 9 mittels der Kupplung 18 über die Rahmenelemente 1 und 4 miteinander verbunden werden. Hierzu weist sowohl das Rahmenelement 1 als auch das Rahmenelement 4 etwa in der Mitte der Länge und bei der benachbarten Anordnung der beiden Wagen in sich gegenüberliegender Lage jeweils eine Öffnung in den Wänden 12 und 13 bzw. 14 und 15 auf, in die jeweils hinein ein Rohrstück 17 bzw. 16 eingesetzt und mit den genannten Wänden vorzugsweise verschweißt ist. Diese Rohrstücke 17 und 16 weisen Bohrungen 2 und 5 auf. In die Bohrung 2 ist ein Rundbolzen 6 eingesetzt, der an seinem oberen Ende mit einem Verbindungsstück 7 mit einem weiteren, kürzeren Rundbolzen 8 verbunden ist, der, wie die Fig. 3 zeigt, in die Bohrung 5 eingesetzt werden kann. In dieser Anordnung verbindet der Rundbolzen 6 über das Verbindungsstück 7 und den kürzeren Rundbolzen 8 die beiden Rahmenelemente 1 und 4 miteinander, so daß auch die zugehörigen Transportwagen 9 miteinander gekuppelt sind.

In der dargestellten Ausführungsform ist die Kupplung 18 einfach U-förmig aus Rundmaterial passenden Durchmessers gebogen mit jeweils unterschiedlichen Schenkellängen des "U" zur Bildung des Rundbolzens 6 und des kürzeren Rundbolzens 8. Die Verbindung der beiden Rundbolzen, die das Verbindungsstück 7 bildet, ist hierbei bogenförmig ausgebildet und kann so als Handgriff benutzt werden.

An seinem freien und überstehenden Ende weist der Rundbolzen 6 ein Sicherungselement 19 in Form einer Spannhülse auf, die durch eine entsprechende Querbohrung durch den Rundbolzen 6 hindurchgeführt ist. Soll die Kupplung zwischen den Rahmenelementen 1 und 4 gelöst werden, so kann die Kupplung 18 einfach an dem als Handgriff ausgebildeten Verbindungsstück 7 hochgehoben werden, bis der kürzere Rundbolzen 8 die Bohrung 5 verlassen hat. Ein völliges Herausziehen der Kupplung 18 wird durch das Sicherungselement 19 verhindert, so daß an mindestens einem Rahmenelement eines Wagens 9 die Kupplung 18 immer verbleibt, so daß sie nicht verloren gehen kann. In dem Rahmenelement, in dem die Kupplung 18 verbleibt, im dargestellten Ausführungsbeispiel ist dies das Rahmenelement 1, kann eine weitere Bohrung 3 einfach z. B. in die Wand 12 des Rahmenelementes eingebracht werden, wobei diese Bohrung 3 einen Durchmesser 24 aufweist und zur Bohrung 2 so beabstandet ist, daß die Kupplung 18 nur um den Rundbolzen 6 geschwenkt werden muß und sodann der kürzere Rundbolzen 8 in die Bohrung 3 eingesetzt werden kann. Dies ist die Ruheposition der Kupplung 18.

Um sowohl in der Ruheposition als auch in der Kupplungsposition ein Klappern der Kupplung 8 zu vermeiden und gleichzeitig um die Kupplungsverbindung zu sichern, ist zwischen dem unteren Ende des Rohrstücks 17 und dem Sicherungselement 19 ein elastisches Element, im Ausführungsbeispiel in Form einer Schraubendruckfeder 20, angeordnet. Ein Entkuppeln muß nun gegen die Kraft dieser Schraubendruckfeder 20 vorgenommen werden, so daß eine solche Kupplung sich nicht zufällig lösen kann, sondern nur bewußt gelöst werden kann.

Bei der Darstellung nach Fig. 1 ist die Kupplung 18 selbst nicht eingezeichnet. Um die Fertigung der Rahmenelemente zu vereinfachen weisen alle Rahmenelemente zwei Bohrungen auf, von denen eine Bohrung die Funktion der Bohrung 3 für die Ruhestellung der Kupplung 18 übernehmen kann, während die andere Bohrung entweder die Funktion der Bohrung 2 für den längeren Rundbolzen 6 oder die Funktion der Bohrung 5 für die Aufnahme des kürzeren Rundbolzens 8 übernehmen kann. Hierdurch wird die Fertigung und die Montage vereinfacht, wenngleich auch mehr Bohrungen eingebracht werden, als erforderlich sind. Es ist natürlich ebenso möglich, in die verschiedenen Rahmenelemente lediglich die erforderlichen Bohrungen einzubringen und die überflüssigen Bohrungen wegzulassen. Dann aber müssen die Rahmenelemente an unterschiedlichen Stellen gefertigt und mit unterschiedlichen Bohrschablonen gebohrt werden und es muß bei der Zusammensetzung des Rahmens darauf geachtet werden, daß die richtigen Rahmenelemente an die richtige Stelle kommen.

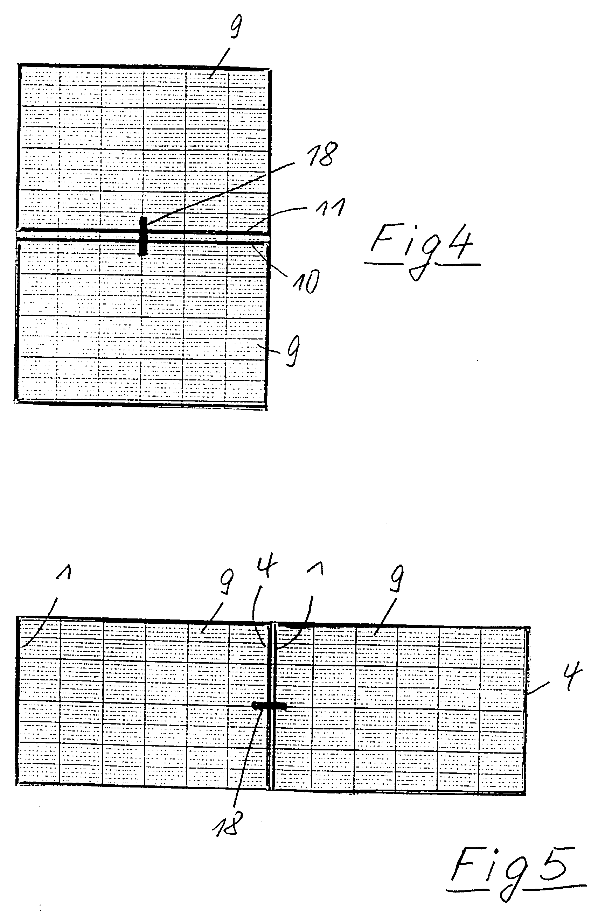

Die Fig. 4 und 5 zeigen in Draufsicht schematisch zwei verschiedene Anordnungsmöglichkeiten von miteinander gekuppelten Transportwagen. In der Anordnung nach Fig. 4 sind die Wagen mit ihren Breitseiten gegeneinander gestellt und über die Kupplung 18 miteinander verbunden. In der Anordnung nach Fig. 5 sind die Transportwagen 9 mit ihren Schmalseiten gegeneinander gestellt und über die Kupplung 18 miteinander verbunden. Auf diese Art und Weise kann eine beliebige Anzahl von Transportwagen 9 miteinander verbunden werden.

### Liste der verwendeten Bezugszeichen

- 1: erste Rahmenelemente
- 2: Bohrung
- 3: Bohrung
- 4: weitere Rahmenelemente
- 5: einzelne Bohrung
- 6: Rundbolzen
- 7: Verbindungsstück
- 8: kurzer Rundbolzen
- 9: Transportwagen
- 10: Rahmenelement
- 11: Rahmenelement
- 12: Wand
- 13: Wand
- 14: Wand
- 15: Wand
- 16: Rohrstück
- 17: Rohrstück
- 18: Kupplung
- 19: Sicherungselement
- 20: Schraubendruckfeder
- 21: Räder
- 22: Säule
- 23: Einlegeböden
- 24: Durchmesser
- 25: Auflagescheibe

## Patentansprüche

1. Auf einer Fahrbahn verfahrbarer Transportwagen mit einem rechtwinkligem Grundrahmen, aus langgestreckten Rahmenelementen bestehend, dadurch gekennzeichnet, daß in mindestens einem ersten Rahmenelement (1,10) zwei vertikal zur Fahrebene verlaufende Bohrungen (2,3), von denen mindestens eine (2) durchgehend ist, und in jedem, dem ersten Rahmenelement (1,10) gegenüberliegenden weiteren Rahmenelement (4,11) mindestens eine einzelne Bohrung (5) vorgesehen ist, wobei in einer durchgehenden Bohrung (2) des ersten Rahmenelementes (1,10) ein Rundbolzen (6) in seiner Längsrichtung verschiebbar und um seine Längsrichtung schwenkbar angeordnet ist, der an seinem oberen Ende über ein Verbindungsstück (7) mit einem kürzeren, nach unten überstehenden Rundbolzen (8) verbunden ist und so eine Kupplung (18) bildet, wobei die einzelne Bohrung (5) so angeordnet ist, daß dann, wenn ein erstes Rahmenelement (1,10) eines Transportwagens (9) benachbart zu dem weiteren Rahmenelement (4,11) eines weiteren Transportwagens liegt, der kürzere Rundbolzen (8) in die einzelne Bohrung (5) dieses weiteren Rahmenelementes (4,11) einsteckbar ist und wobei die zweite Bohrung (3) des ersten Rahmenelementes (1,10) zu dessen anderer Bohrung (2) so beabstandet ist, daß in Ruhestellung der kürzere Rundbolzen (8) nach einer Schwenkung um die Längsrichtung des Rundbolzens (6) dort einsteckbar ist.

2. Transportwagen nach Anspruch 1, dadurch gekennzeichnet, daß die langgestreckten Rahmenelemente (1,4,10,11) aus Vierkantrohr gebildet sind, in deren parallel zur Fahrebene liegendende Wände (12-15) die Bohrungen (2,3,5) eingebracht sind.

3. Transportwagen nach Anspruch 2, dadurch gekennzeichnet, daß mindestens die zur Herstellung der Verbindung mittels der Kupplung (18) dienenden Bohrungen (2,5) von in entsprechende Öffnungen der Rahmenelemente (1,4,10,11) eingesetzten Rohrstücken (16,17) gebildet werden.

4. Transportwagen nach Anspruch 3, dadurch gekennzeichnet, daß Rohrstücke (16,17) eingeschweißt sind.

5. Transportwagen nach Anspruch 1, dadurch gekennzeichnet, daß die Kupplung (18) U-förmig aus Rundmaterial gebogen ist mit zur Bildung des Rundbolzens (6) und des kürzeren Rundbolzens (8) entsprechend unterschiedlich langen Schenkeln, die über das Verbindungsstück (7) miteinander verbunden sind.

6. Transportwagen nach Anspruch 5, dadurch gekennzeichnet, daß der Rundbolzen (6) auf der Unterseite der zugeordneten Bohrung (2) übersteht und am überstehenden Ende ein Sicherungselement (19) gegen Herausziehen aufweist.

7. Transportwagen nach Anspruch 6, dadurch gekennzeichnet, daß zwischen Sicherungselement (19) und Rohrstück (16) ein elatisches Element angeordnet ist.

8. Transportwagen nach Anspruch 7, dadurch gekennzeichnet, daß das elastische Element als koaxial zum Rundbolzen (6) angeordnete Schraubendurckfeder (20) ausgebildet ist.

9. Transportwagen nach einem der Ansprüche 6 bis 8, dadurch gekennzeichnet, daß das Sicherungselement (19) als quer durch eine entsprechende Bohrung getriebene Spannhülse ausgebildet ist.

10. Transportwagen nach Anspruch 5, dadurch gekennzeichnet, daß das Verbindungsstück (7) bogenförmig zur Bildung eines Handgriffes ausgebildet ist.

11. Transportwagen nach Anspruch 10, dadurch gekennzeichnet, daß zwischen Rundbolzen (6) und dem Anfang des bogenförmigen Verbindungstückes koaxial zum Rundbolzen (6) eine Auflagescheibe (25) vorgesehen ist.

## Claims

1. Truck capable of travelling on a road with a right-angled base frame consisting of elongate frame elements characterized in that two orifices (2, 3) extending vertically to the plane of travel of which at least one (2) is continuous is provided in at least one first frame element (1, 10) and at least one individual orifice (5) is provided in each further frame element (4, 11) opposite the first frame element (1, 10), wherein a round bolt (6) is arranged so as to be displaceable in its longitudinal direction and pivotal round its longitudinal direction in a continuous orifice (2) in the first frame element (1, 10), the round bolt (6) being connected at its upper end via a connecting piece (7) to a shorter, downwardly projecting round bolt (8) and thus forming a coupling (18), wherein the individual orifice (5) is arranged in such a way that, when a first frame element (1, 10) of a truck (9) is located adjacently to the further frame element (4, 10) of a further truck, the shorter round bolt (8) can be inserted into the individual orifice (5) of this further frame element (4, 11) and wherein the second orifice (3) of the first frame element (1, 10) is spaced from its other orifice (2) in such a way that, in the rest position, the shorter round bolt (8) after pivoting round the longitudinal direction of the round bolt (6) can be inserted there.

2. Truck according to Claim 1, characterized in that the elongate frame elements (1, 4, 10, 11) are formed from rectangular tube in whose walls (12 - 15) located parallel to the plane of travel the orifices (2, 3, 5) are introduced.

3. Truck according to Claim 2, characterized in that at least the orifices (2, 5), serving to produce the connection by means of the coupling (18), are formed by pieces of tube (16, 17) inserted into corresponding apertures in the frame elements (1, 4, 10, 11).

4. Truck according to Claim 3, characterized in that pieces of tube (16, 17) are welded in.

5. Truck according to Claim 1, characterized in that the coupling (18) is bent into the form of a U from round material with arms which are accordingly of different lengths to form the round bolt (6) and the shorter round bolt (8) and are connected to one another via the connecting piece (7).

6. Truck according to Claim 5, characterized in that the round bolt (6) projects on the lower side of the associated orifice (2) and, at the projecting end, has a securing element (19) to prevent it from being pulled out.

7. Truck according to Claim 6, characterized in that a resilient element is arranged between securing element (19) and piece of tube (16).

8. Truck according to Claim 7, characterized in that the resilient element is designed as a helical compression spring (20) arranged coaxially to the round bolt (6).

9. Truck according to one of Claims 6 to 8, characterized in that the securing element (19) is designed as a clamping sleeve driven transversely through a corresponding orifice.

10. Truck according to Claim 5, characterized in that the connecting piece (7) is designed in the form of an arc to form a handle.

11. Truck according to Claim 10, characterized in that a support plate (25) is provided between round bolt (6) and the beginning of the arc-shaped connecting piece coaxially to the round bolt (6).

## Revendications

1. Chariot apte à rouler sur une chaussée, comportant un châssis de base rectangulaire formé d'éléments de châssis allongés, caractérisé en ce qu'il est prévu dans au moins un premier élément de châssis (1, 10) deux perçages (2, 3) verticaux par rapport au plan de roulement, dont l'un (2) au moins est traversant, tandis qu'il est prévu dans chaque autre élément de châssis (4, 11) opposé au premier (1, 10) au moins un perçage individuel (5), étant précisé qu'on dispose dans un perçage traversant (2) du premier élément de châssis (1, 10) une tige ronde (6) qui est mobile dans le sens de son axe longitudinal et apte à pivoter autour de son axe longitudinal, et dont l'extrémité supérieure est reliée par l'intermédiaire d'une pièce de liaison (7) à une tige ronde plus courte (8) saillant vers le bas, formant ainsi un accouplement (18), et étant précisé que le perçage individuel (5) est disposé de telle sorte que lorsqu'un premier élément de châssis (1, 10) d'un chariot (9) est voisin de l'autre élément de châssis (4, 11) d'un autre chariot, la tige ronde courte (8) peut être introduite dans le perçage individuel (5) de cet autre élément de châssis (4, 11), tandis que le second perçage (3) du premier élément (1, 10) est espacé de l'autre perçage (2) de celui-ci de telle sorte qu'en position de repos, la tige ronde courte (8) peut être introduite à cet endroit après un pivotement autour de l'axe longitudinal de la tige ronde (6).

2. Chariot selon la revendication 1, caractérisé en ce que les éléments de châssis allongés (1, 4, 10, 11) sont formés à partir d'un tube carré dont les parois (12-15) parallèles au plan de roulement portent les perçages (2, 3, 5).

3. Chariot selon la revendication 2, caractérisé en ce qu'au moins les perçages (2, 5) servant à réaliser la liaison à l'aide de l'accouplement (18) sont formés par des pièces tubulaires (16, 17) insérées dans des ouvertures correspondantes des éléments de châssis (1, 4, 10, 11).

4. Chariot selon la revendication 3, caractérisé en ce que les pièces tubulaires (16, 17) sont soudées.

5. Chariot selon la revendication 1, caractérisé en ce que l'accouplement (18) est plié en forme de U à partir d'un matériau rond avec des branches de longueurs différentes correspondantes pour former la tige ronde (6) et la tige ronde courte (8), lesdites branches étant reliées entre elles par la pièce de liaison (7).

6. Chariot selon la revendication 5, caractérisé en ce que la tige ronde (6) dépasse du côté inférieur du perçage associé (2) et comporte, à son extrémité saillante, un élément de protection (19) qui empêche de l'enlever.

7. Chariot selon la revendication 6, caractérisé en ce qu'un élément élastique est disposé entre l'élément de protection (19) et la pièce tubulaire (16).

8. Chariot selon la revendication 7, caractérisé en ce que l'élément élastique est conçu comme un ressort cylindrique de compression (20) disposé coaxialement par rapport à la tige ronde (6).

9. Chariot selon l'une des revendications 6 à 8, caractérisé en ce que l'élément de protection (19) est conçu comme une douille de serrage pressée transversalement dans un perçage approprié.

10. Chariot selon la revendication 5, caractérisé en ce que la pièce de liaison (7) a une forme arquée afin de former une poignée.

11. Chariot selon la revendication 10, caractérisé en ce qu'il est prévu, entre la tige ronde (6) et le début de la pièce de liaison arquée, une rondelle d'appui (25) coaxiale par rapport à la tige ronde (6).
